Europäisches Patentamt

European Patent Office

Office européen des brevets

(19)

(11) Publication number: **0 539 740 A2**

## (12) EUROPEAN PATENT APPLICATION

(21) Application number: **92116614.6**

(22) Date of filing: **29.09.92**

(51) Int. Cl.⁵: **G06K 9/62, G06K 9/22**

(30) Priority: **30.10.91 US 784868**

(43) Date of publication of application:
**05.05.93 Bulletin 93/18**

(84) Designated Contracting States:
**DE FR GB**

(71) Applicant: **International Business Machines Corporation**
**Old Orchard Road**
**Armonk, N.Y. 10504(US)**

(72) Inventor: **Tappert, Charles Carson**
**Beach Road**
**Ossining, N.Y. 10562(US)**

(74) Representative: **Herzog, Friedrich Joachim, Dipl.–Ing.**
**IBM Deutschland Informationssysteme GmbH Patentwesen und Urheberrecht**
**Pascalstrasse 100**
**W–7000 Stuttgart 80 (DE)**

(54) **A corner–skip cost function for improving elastic matching in online character recognition.**

(57) A corner–skip cost function in an elastic–matching recognizer increases the match distance between an unknown character and a prototype character when a corner or cusp of the prototype is skipped. The identification of a corner is based on a measurement of angle change at a point on a line segment of a character. The raw angle–change measurement of a point is the direction angle of the line segment from a current point to the next point, minus the direction angle of the line segment from the previous point to the current point.

FIG. 3

EP 0 539 740 A2

The invention is in the field of signal processing, and in particular is directed to handwriting recognition. Specifically, the invention is directed to improving the matching at corners and cusps in an elastic matching online character recognition system.

In handwriting and character recognition, there is difficulty in recognizing characters, which difficulty is increased at corners and cusps.

There are a number of patents directed to handwriting recognition, each having certain advantages and disadvantages.

U.S. Patent No. 4,817,179 to Buck is directed to digital matrices, for example digitized images which are enhanced by comparing a matrix to be enhanced with plural enhancement patters for each position in the matrix of each element of the matrix to produce pattern codes commensurate with the matches with the enhancement patterns. The pattern codes are employed to generate plural enhancement decisions for each element of the matrix and these enhancement decisions are combined to provide a single enhancement action for each element of the matrix. There is, however, no teachings directed to corners and cusps.

U.S. Patent No. 5,005,205 to Ellozy et al is directed to a handwriting recognition system which utilizes a method for differentiating a first character from a second character having similar characteristics. The method includes the steps of determining during a training session at least one pairwise discriminant measure associated with the first character and with the second character. The step of determining includes a step of evaluating with a potential discriminant measure a plurality of prototype second characters. Subsequently, during a handwriting recognition session, the method evaluates with at least one of the previously determined discriminant measures selected from a set of same an input character identified as being either the first prototype character or the second prototype character. The step of evaluating includes a step of analyzing a stroke or strokes associated with the input character in accordance with one or more of the pairwise discriminant measures selected from the set, summing the results of each discriminant measure analysis to obtain a result for each of the pair of characters associated with the pairwise discriminate measure, and selecting a character from the pair that has a maximum value result. There is, however, no teachings directed to corners and cusps.

U.S. Patent No. 5,023,918 to Lipscomb is directed to a method and apparatus for filtering a sequence of digital values representative of endpoints of vectors which represent the stroke of a writing instrument on a writing tablet. The cross – product and dot – product of the vectors comprising the stroke are computed to produce a sample of points which are close together where the stroke is substantially straight. There is a teaching of filtering corners and cusps, but there is no teaching relative to corners and cusps in the recognition process.

An article by J.M Kurtzberg and C.C. Tappert, "Symbol Recognition System by Elastic Matching", IBM Tech. Disclosure Bulletin, Vol. 24, No. 6, pp. 2897 – 2902, November 1981, describes a technique for utilizing elastic matching to recognize symbols. There is, however, no teachings directed to corners and cusps. An article by C.C. Tappert, "Cursive Script Recognition System By Elastic Matching", IBM Tech. Disclosure Bulletin, Vol. 24, No. 11A, pp. 5404 – 5407 describes a technique for utilizing elastic matching to recognize cursive script. There is, however, no teachings directed to corners and cusps.

It is therefore an object of the invention to provide an improved handwriting recognition system.

The object of the invention is solved basically by applying the features laid down in the independent claims.

According to the present invention, an improvement to an elastic – matching recognizer is obtained at key points such as corners and cusps. A corner – skip cost function is added to an elastic matcher to increase the match distance between an unknown character and a prototype character when a corner or cusp of the prototype character is skipped.

The invention especially provides an improved elastic matching handwriting recognition system and particularly an improved elastic matching at corners and cusps and a handwriting recognition system.

A corner – skip cost function in an elastic – matching recognizer increases the match distance between an unknown character and a prototype character when a corner or cusp of the prototype is skipped. The identification of a corner is based on a measurement of angle change at a point on a line segment of a character. The raw angle – change measurement of a point is the direction angle of the line segment from a current point to the next point, minus the direction angle of the line segment from the previous point to the current point.

In the following preferred embodiments of the invention are described in more detail with reference to the drawing in which

Fig. 1    is a diagram illustrating an elastic match of an unknown character "3" with a prototype character "3";

Fig. 2    is a diagram illustrating elastic matching of characters "k" and "h";

Fig. 3 is a simplified block diagram of a handwriting recognition system constructed and operated in accordance with the invention;

Fig. 4 is a flowchart detailing the computation of a corner−skip cost for each point of a prototype character;

Fig. 5 is a diagram illustrating an elastic matching computation region; and

Fig. 6 is a flow chart detailing an elastic matching procedure including a corner−skip cost function.

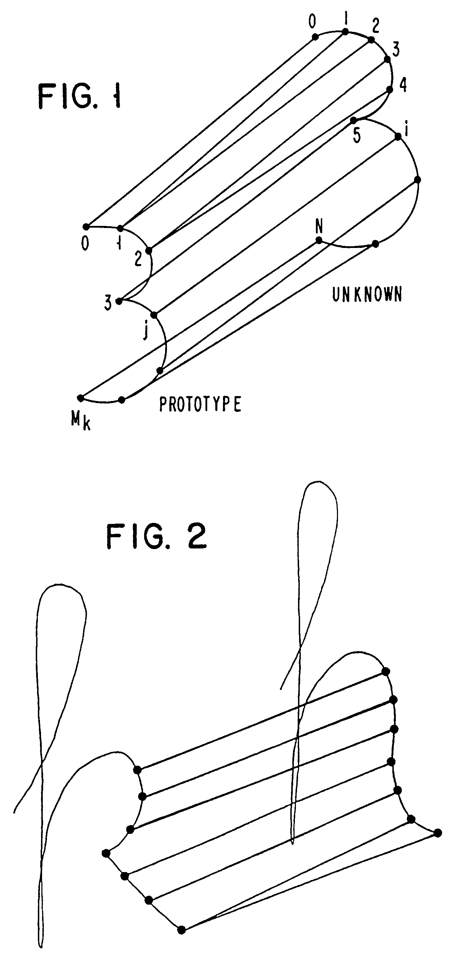

This invention is directed to an improvement of the elastic matching algorithm as applied to the recognition of handwritten characters. A typical elastic matching algorithm is first described. With reference to Fig. 1, in matching an unknown against a prototype, a distance metric is used to compare an arbitrary point i in the unknown with a point j in the kth prototype. A common point distance is Euclidean distance.

The point distance is used to obtain an overall distance for comparing an unknown character against a prototype. The overall distance permits non−linear elasticity on the part of the prototype stretching up to a factor of two and compressing up to a factor of one half. This accounts for normal differences in writing rate that cause repeated writings of the same character to vary in length and also cause nonlinear time variation in the shape of a character. Mathematically, overall distance between the unknown and prototype is found by computing the minimum value of the sum of d(i,j;k) for all possible choices of a warping function, as indicated in the equation,

$$Dk = \min_{w(i)} \sum_{i=1}^{N} d(i, w(i); k),$$

where N is the length of the unknown, w is a warping function mapping the time index of the unknown to the time index of the prototype, and Dk is the overall distance between prototype k and the unknown. Boundary conditions w(1) = 1 and w(N) = Mk, where Mk is the length of prototype k, ensure that the first and last points of the prototype match, respectively those of the unknown. Furthermore, the continuity condition w(i + 1) − w(i) = 0, 1, 2 for i = 1, ....., N − 1 restricts the warping function to monotonically increasing functions, preserving the usual notion of time ever increasing, and limits the degree of expansion and compression.

This distance is computed efficiently by dynamic programming using the recursion relation

$$D(i, j; k) = d(i, j; k) + \min \left\{ \begin{array}{l} D(i - 1, j, k) \\ D(i - 1, j - 1; k) \\ D(i - 1, j - 2; k) \end{array} \right\},$$

where D(i, j; k) is the cumulative distance from (1,1) to (i, j). Starting with D(1, 1; k) = d(1, 1; k) and D(i, j; k) large (infinite) elsewhere, the cumulative distance recurrence relation is used to obtain, for all possible paths through the model, the minimum distance Dk = D(N, Mk; k) between prototype k and the unknown, where N is the length of the unknown and Mk is the length of prototype k.

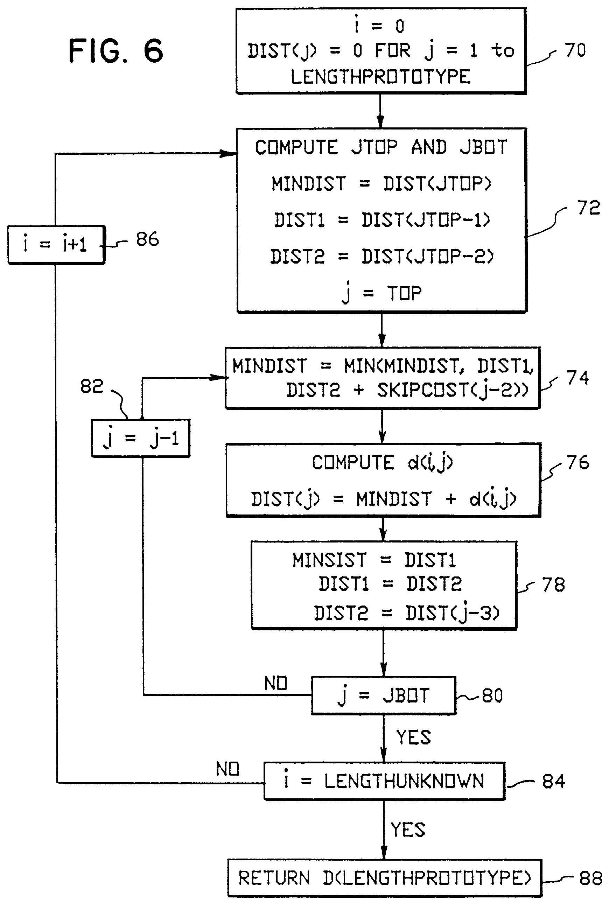

Recognition is performed as follows. The unknown character is matched against each prototype with the same number of strokes on a stroke−by−stroke basis. That is, the first stroke of the unknown is matched with the first stroke of the prototype, the second with the second, etc. A stroke is the writing from pen down to pen up. The unknown character is assigned the label of (is recognized as) that prototype yielding the smallest overall distance. A flowchart of the elastic matching procedure is the same as that shown in Fig. 6 but without the SkipCost term.

When an elastic−matching recognizer as described above is used for the recognition of handwritten characters, there is an inherent problem in obtaining proper matching at key points such as corners and cusps. A cusp is a point at which the direction reverses. This matching problem arises from the fact that a point in a prototype can be skipped without cost with existing elastic matching procedures. By skipping corners and cusps an unknown character can sometimes match well against a prototype of an incorrect character class. For example, skipping the corner in an 'L' can make it appear rounded like a 'C.' Also, skipping the cusp of a 'k' can make appear like an 'h' as shown in Fig. 2.

Disclosed is a corner–skip cost function that is added to an elastic matcher to increase the match distance between the unknown and prototype when a corner or cusp of the prototype is skipped. The identification of a corner is based on a measurement of angle change at a point. The raw angle–change measurement of a point is the direction angle of the line segment from the current point to the next minus the direction angle of the line segment from the previous point to the current. Angle change is "normalized" to a non–negative value in the range 0 (no angle change) to 180 degrees (the maximum direction reversal). Hereinafter, normalized angle change will simply be referred to as "angle change".

The corner–skip cost function is computed as follows. The corner–skip cost function is assigned a value for each point of a prototype. The cost function is initialized to zero. If the point is not near a stroke edge (for example, not within two points of the beginning or end), and if the angle change of the point is significant, that is, if it is greater than a threshold in the range of 30 degrees to 55 degrees, with 42 degrees being preferred; and if it is significantly greater than the adjacent angle changes by a factor in the range of 1.5 – 3.0, with a factor of 2 being preferred, then the corner–skip cost function is set to a constant times the angle change.

There are four significant parameters of this algorithm. First, setting the cost function to zero near stroke edges ensures that there is no cost for skipping hooks. A "hook" is extra data, having the appearance of a hook, recorded at a stroke edge (beginning or end) due to inaccuracies of recording pen up/down. Second, the angle change must be significant. Third, checking that the angle change is significantly greater than that of its neighbors, increases the likelihood that it is a key point and not just a point of a curved region. It is desirable that points in curved regions, such as those at the top of the loop of a script, for example an 'e', be skipped without cost to facilitate the match in these regions. Fourth, making the corner–skip cost function proportional to the angle change at that point increases the cost in proportion to the sharpness of the corner, a desirable feature.

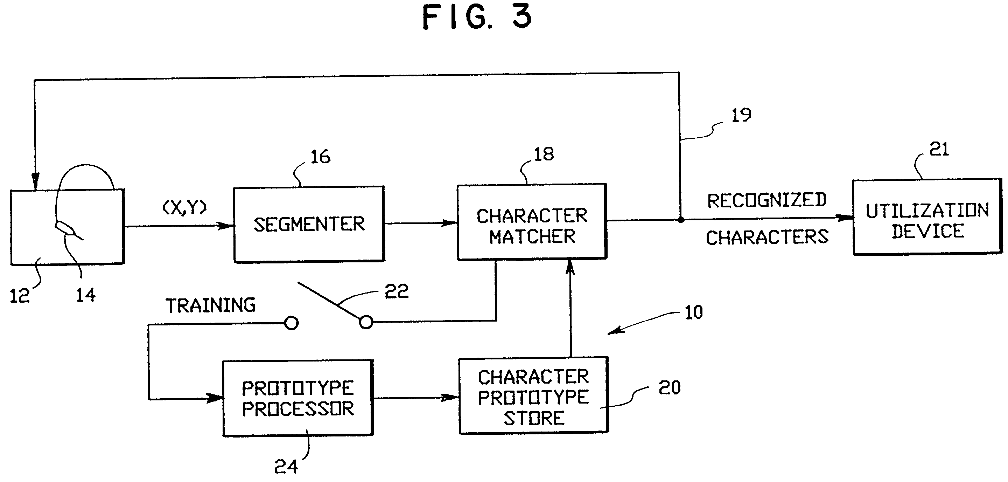

Referring the Fig. 3, there is shown an online handwriting character recognition system 10 constructed and operated in accordance with the invention. System 10 includes a handwriting transducer comprised of an electronic tablet and display 12 having a writing implement, such as a stylus 14. In response to handwritten characters the transducer outputs a serial stream of (x,y) coordinate pairs corresponding to a position of the stylus 14 relative to the coordinate system of tablet 12. The coordinate pairs are provided to a stroke segmenter 16 that identifies a beginning and an end of discrete handwritten strokes. Strokes are provided to a character matcher 18. Character matcher 18 is coupled to a store 20 of predetermined character prototypes for comparing points of input strokes to points of stored character prototypes so as to identify, to within some probability, that an input stroke or assemblage of strokes represents a specific character. Recognized characters are output from the matcher 18 via line 19 to tablet and display 12 to display the recognized characters, or may be applied to a utilization device 21 such as a display, an application, such as a word processing program, or the like. In some systems the functionality of the segmenter 16 and the character matcher 18 may be combined within one handwritten stroke processing unit.

Character prototypes may be provided to the store 20 during a training session held with a user of the system 10. The character prototypes may be entered by a specific user of the system and thereafter used only when the specific user enter handwritten characters. Also, a global or universal set of character prototypes may be generated for use with more than one user.

In this regard a starter prototype set may be designed as a initial prototype set to be used by any writer on first using the system 10. If desired, a writer may then add character prototypes in his/her own writing style to obtain a prototype set tailored to the writer, also referred to as an individualized prototype set. In that a starter prototype set is typically created by an expert in handwriting recognitions systems, there is no burden placed on a user of the system 10 to follow any writing suggestions or constraints.

In any case, during a training session characters from character matcher 18 are routed through a physical or logical switch 22 to a prototype processor 24, which for example may be an Intel '386 processor. The output of prototype processor 24 is a series of averaged prototype characters that are supplied to store 20 for subsequent use during a handwriting recognition session conducted with a user of the system 10.

In accordance with the invention there are provided methods of operating the prototype processor 24 so as to create character prototypes for improving the recognition accuracy utilizing a corner–skip cost function.

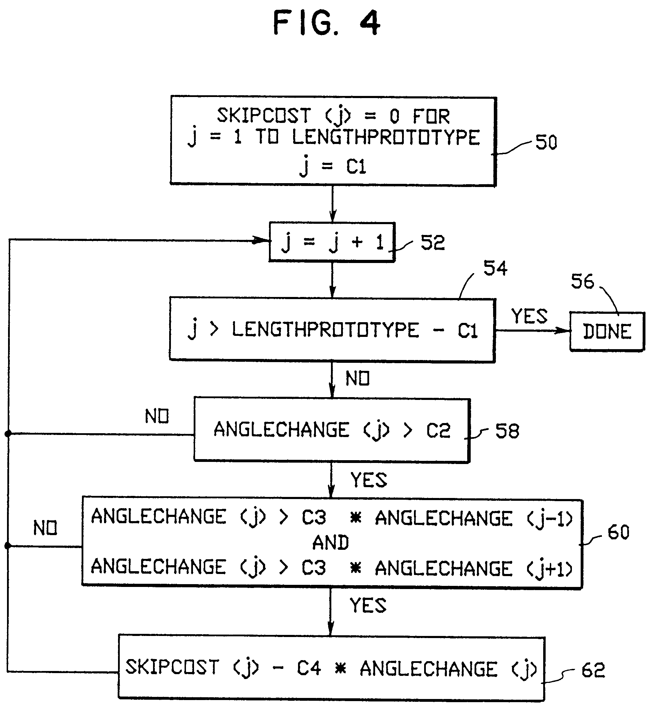

A flowchart of the computation of the corner – skip cost function is shown in Fig. 4. The cost function is initialized to zero for all points of the prototype and j is initialized to C1 in block 50. In block 52, j is incremented by 1. A test is made to determine whether j exceeds the prototype length − C1 in block 54. If the test is positive, computation terminates as indicated at block 56. Otherwise, computation continues to block 58 where a test is made to determine whether the angle change at point j exceeds the threshold C2. If not, computation returns to block 52. If it does, computation continues to block 60 where a test is made to determine whether the angle change exceeds the previous and next angle changes by a factor of C3. If not, computation returns to block 52. If it does, computation continues to block 62 where the SkipCost at point j is assigned the value C4 times the angle change. Computation then returns to block 52.

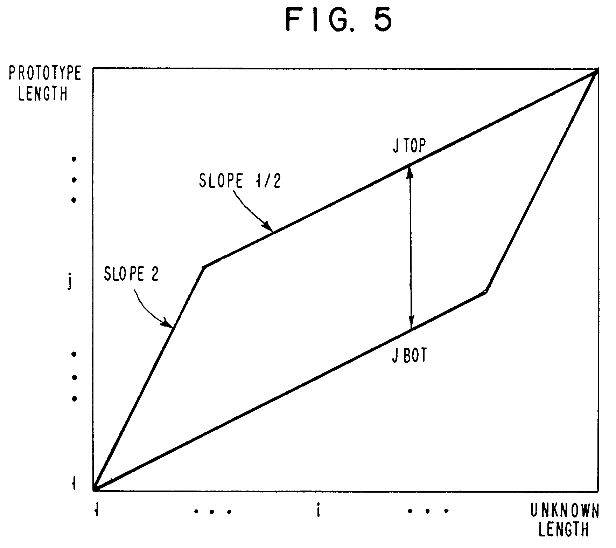

A flowchart of the computation of elastic matching with the corner – skip cost function is shown in Fig. 6. It makes use of the computation region for elastic matching shown in Fig. 5. An array of distances, Dist(j), for each point of the prototype, is used in the computation. The array Dist(j) is initialized to zero for each point in the prototype and i is initialized to zero in block 70. In block 72 JTop and JBot are computed from the boundaries of the computation region (Fig. 5), MinDist is initialized to Dist(JTop), Distl is initialized to Dist(JTop − 1), Dist2 is initialized to Dist(JTop − 2), and j is initialized to JTop. In block 74, MinDist is computed as the minimum of MinDist, Dist1 and Dist2 + SkipCost(j − 2). In block 76, the point – to – point distance d(i,j) is computed using the specified distance metric and added to MinDist to obtain Dist(j). In block 78, MinDist is reset to Dist1, Dist1 equal to Dist2, and Dist2 equal to Dist(j − 3). In block 80, a test is made to determine whether j equals JBot. If not, then j is decremented in block 82 and computation returns to block 74. If so, then a test is made to determine whether i equals the length of the unknown in block 84. If not, then i is incremented in block 86 and computation returns to block 72. If so, then the matching distance of the unknown against this prototype has been determined at block 88 as D(LengthPrototype) ending the computation.

An embellishment of this algorithm is to add another cost function to penalize repeats, that is, where the same prototype point is matched against successive points in the unknown. This is done by adding the term RepeatCost(j) to MinDist on the right hand side of the equation in block 74 of Fig. 6. For handwritten character recognition, however, the corner – skip cost function is more important for improving accuracy than a repeat cost function.

## Claims

1. In a handwriting recognition system, a method of testing for sharp corners within a stroke, comprising the steps:
    sampling said stroke point by point;
    measuring angle change at each point;
    determining if the angle change at a given point is greater than a predetermined threshold value;
    determining if said angle change is greater by a predetermined factor than the angle changes at at least the two adjacent points to said given point; and
    computing a corner – skip cost function which is equal to a constant times the determined angle change at said given point if the angle change is greater than said predetermined angle and if said angle change is greater than said predetermined factor, and which is otherwise zero.

2. The method of claim 1, wherein said threshold value is in the range of 30˚ − 55˚.

3. The method of claim 1 or 2, wherein said predetermined factor is in the range of 1.5 − 3.0.

4. In a handwriting recognition system, a method of testing for sharp corners within each stroke forming a prototype character, comprising the steps:
    sampling said each stroke point by point;
    measuring angle change at each point;
    determining if the angle change at a given point is greater than a predetermined threshold value;
    determining if said angle change is greater by a predetermined factor than the angle changes at at least the adjacent points on either side of said given point; and
    computing a corner – skip cost function which is equal to a constant times the determined angle change at said given point if:
        (a) the angle change is greater than said predetermined angle; and
        (b) if said angle change is greater than said predetermined factor.

5. The method of claim 4, including the steps of:
   sampling each stroke of an unknown character point by point;
   matching said unknown character with said prototype character point by point; and
   increasing the match distance between said given point on said prototype character and a cor‑responding point on said unknown character in response to the computation of said corner‑skip cost function.

6. The method of claim 4 or 5, including the step of:
   setting said corner‑skip cost function to zero if either:
   (a) the angle change is not greater than said predetermined angle; or
   (b) said angle change is not greater than said perdeterminted factor.

7. The method according to any one of the claims 4 to 6, wherein said threshold value is in the range of 30˚ − 50˚.

8. The method according to any one of the claims 4 to 7, wherein said predetermined factor is in the range of 1.5 − 3.0.

FIG. 1

PROTOTYPE

UNKNOWN

FIG. 2

# FIG. 3

SEGMENTER 16

CHARACTER MATCHER 18

19

UTILIZATION DEVICE 21

(X,Y)

RECOGNIZED CHARACTERS

12    14

TRAINING

22

10

PROTOTYPE PROCESSOR 24

CHARACTER PROTOTYPE STORE 20

EP 0 539 740 A2

# FIG. 4

SKIPCOST ⟨j⟩ = 0 FOR
j = 1 TO LENGTHPROTOTYPE
j = C1 ⟶ 50

j = j + 1 ⟶ 52

j > LENGTHPROTOTYPE − C1 ⟶ 54  YES ⟶ DONE ⟶ 56

NO

ANGLECHANGE ⟨j⟩ > C2 ⟶ 58   NO

YES

ANGLECHANGE ⟨j⟩ > C3 * ANGLECHANGE ⟨j−1⟩
AND
ANGLECHANGE ⟨j⟩ > C3 * ANGLECHANGE ⟨j+1⟩ ⟶ 60   NO

YES

SKIPCOST ⟨j⟩ − C4 * ANGLECHANGE ⟨j⟩ ⟶ 62

# FIG. 5

PROTOTYPE
LENGTH

SLOPE 1/2

SLOPE 2

J TOP

J BOT

j

i

1

1 ... i ... UNKNOWN
LENGTH

FIG. 6

i = 0
DIST(j) = 0 FOR j = 1 to
LENGTHPROTOTYPE ⌐ 70

COMPUTE JTOP AND JBOT
MINDIST = DIST(JTOP)
DIST1 = DIST(JTOP-1)
DIST2 = DIST(JTOP-2)
j = TOP ⌐ 72

i = i+1 ⌐ 86

MINDIST = MIN(MINDIST, DIST1,
DIST2 + SKIPCOST(j-2)) ⌐ 74

82

j = j-1

COMPUTE d(i,j)
DIST(j) = MINDIST + d(i,j) ⌐ 76

MINSIST = DIST1
DIST1 = DIST2
DIST2 = DIST(j-3) ⌐ 78

NO
j = JBOT ⌐ 80

YES

NO
i = LENGTHUNKNOWN ⌐ 84

YES

RETURN D(LENGTHPROTOTYPE) ⌐ 88